# EUROPÄISCHE PATENTSCHRIFT

(11) **EP 1 664 863 B1**
(45) Veröffentlichungstag und Bekanntmachung des Hinweises auf die Patenterteilung: **11.03.2015**
(21) Anmeldenummer: 04786740.3
(22) Anmeldetag: 09.09.2004
(51) Int. Cl.: G02B 5/30, B32B 27/36, B41M 3/14, G03H 1/02, B42D 15/00

(54) **VERFAHREN UND FOLIENSYSTEM ZUR HERSTELLUNG EINES INDIVIDUALISIERTEN OPTISCH VARIABLEN ELEMENTS**
METHOD AND FILM SYSTEM FOR PRODUCING A PERSONALISED, OPTICALLY VARIABLE ELEMENT
PROCEDE ET SYSTEME DE FILM POUR LA PRODUCTION D'UN ELEMENT OPTIQUEMENT VARIABLE, PERSONNALISE

(30) Priorität: 16.09.2003 DE 10342674
(43) Veröffentlichungstag der Anmeldung: 07.06.2006
(73) Patentinhaber: Leonhard Kurz Stiftung & Co. KG, 90763 Fürth (DE)
(72) Erfinder: KATSCHOREK, Haymo, 90578 Obermichelbach (DE); REINHART, Werner, 90513 Zirndorf (DE); SEITZ, Mathias, 91054 Buckenhof (DE)
(74) Vertreter: Zinsinger, Norbert
(86) Internationale Anmeldenummer: PCT/DE2004/002018
(87) Internationale Veröffentlichungsnummer: WO 2005/029135

(56) Entgegenhaltungen:
- EP-A- 0 327 895
- EP-A- 1 189 079
- EP-A- 1 227 347
- US-B1- 6 515 717
- MOIA F ET AL: "OPTICAL LPP/LCP DEVICES: A NEW GENERATION OF OPTICAL SECURITY ELEMENTS" PROCEEDINGS OF THE SPIE, SPIE, BELLINGHAM, VA, US, Bd. 3973, 27. Januar 2000 (2000-01-27), Seiten 196-203, XP008003043 ISSN: 0277-786X
- SCHADT M ET AL: "PHOTO-INDUCED ALIGNMENT AND PATTERNING OF HYBRID LIQUID CRYSTALLINEPOLYMER FILMS ON SINGLE SUBSTRATES" JAPANESE JOURNAL OF APPLIED PHYSICS, PUBLICATION OFFICE JAPANESE JOURNAL OF APPLIED PHYSICS. TOKYO, JP, Bd. 34, Nr. 6B, 15. Juni 1995 (1995-06-15), Seiten L764-L767, XP000578770 ISSN: 0021-4922

## Beschreibung

Die Erfindung betrifft ein Verfahren zur Herstellung eines individualisierten optisch variablen Elements mit polarisierenden Eigenschaften sowie ein Foliensystem bestehend aus einem Substratkörper und einem Folienkörper zur Bereitstellung eines individualisierten optisch variablen Elements mit polarisierenden Eigenschaften.

EP 1 227 347 A1 beschreibt ein Herstellungsverfahren für ein individualisiertes optisch variables Element mit polarisierenden Eigenschaften.

Bei diesem Verfahren wird auf ein Substrat mittels eines Tintenstrahldruckers eine erste Orientierungsschicht aufgedruckt, welche sich durch Bestrahlung mit polarisiertem Licht in eine bestimmte Orientierungsrichtung ausrichten lässt. Anschliessend wird eine Schicht aus einem Flüssigkristall-Material mittels eines Tintenstrahldruckers auf die Orientierungsschicht aufgebracht und Bedingungen geschaffen, unter denen sich das Flüssigkristall-Material ausrichtet. Anschliessend wird die Flüssigkristallschicht mit UV-Licht ausgehärtet.

Um individualisierte Bereiche mit unterschiedlichen Polarisations-Eigenschaften zu erzeugen, werden die Orientierungsschicht aus einem Photopolymer und die Schicht aus einem Flüssigkristall-Material durch einen Computer gesteuert nur bereichsweise, in jeweiligen individuellen Bereichen auf die Substratschicht mittels des Tintenstrahldruckers aufgebracht. Weiter wird hierzu folgendes Vorgehen vorgeschlagen:
bestrahlt, wodurch eine entsprechend einheitliche Orientierung der musterförmigen Photopolymerschicht erreicht wird. Sodann wird eine zweite Photopolymerschicht gemäss eines zweiten Musters mit dem Tintenstrahldrucker aufgebracht und anschliessend mit linear polarisiertem Licht bestrahlt. Die Polarisationsrichtungen der ersten und zweiten Bestrahlung unterscheiden sich, so dass sich Orientierungs-Schichten mit unterschiedlichen Orientierungen ergeben, die übereinander angeordnet sind. Durch diese Mehrfachbeschichtung in Kombination mit einer entsprechenden musterförmigen Ausgestaltung der einzelnen übereinander angeordneten Photopolymerschichten sind Bereiche mit unterschiedlichen Orientierungen erzielbar.

Die US 6 515 717 B1 beschreibt ein computerbasiertes System zur Herstellung eines Mehrfarbenbildes unter Verwendung von cholesterischem Flüssigkristallpigmentmaterial, welches aus Flakes enthaltend einen Flüssigkristall besteht. Ein Muster aus unterschiedlich farbigem Flüssigkristallpigmentmaterial wird auf ein Bindemittel aufgebracht, welches auf dem Substrat vorgesehen ist. Die Flakes werden hergestellt, indem ein Polyamidmaterial mit einem Flüssigkristallmaterial beschichtet wird und dann ein zweites Flüssigkristallmaterial aufgebracht wird, sodass die Flakes aus zwei Schichten bestehen, wobei die eine Schicht linkshändisch polarisiertes Licht reflektiert und die andere Schicht rechtshändig polarisiertes Licht reflektiert. Weiter wird beschrieben, dass die Flakes elektrisch geladen werden können und so in einem im Bereich des Bindemittels generierten elektromagnetischen Feld ausgerichtet werden können, sodass die Flakes im Wesentlichen parallel zur Oberfläche des Bindemittels zum Liegen kommen.

Der Erfindung liegt nun die Aufgabe zugrunde, die Herstellung eines individualisierten optisch variablen Elements mit polarisierenden Eigenschaften zu verbessern.

Diese Aufgabe wird von einem Verfahren zur Herstellung eines individualisierten optisch variablen Elements mit polarisierenden Eigenschaften gelöst, bei dem zur Herstellung des optisch variablen Elementes ein aus zwei oder mehr Schichten bestehender Folienkörper, der eine aus Flüssigkristall-Material bestehende LCP-Schicht aufweist, auf einen Substratkörper aufgebracht wird, der eine Orientierungsschicht zur Orientierung von Flüssigkristallen aufweist, bei dem die Orientierungs-Schicht des Substratkörpers vor Aufbringung des Folienkörpers auf den Substratkörper individualisiert wird und bei dem der Folienkörper derart auf die individualisierte Orientierungs-Schicht des Substratkörpers aufgebracht wird, dass die LCP-Schicht des Folienkörpers auf der individualisierten Orientierungs-Schicht des Substratkörpers zur Orientierung von Flüssigkristallen der LCP-Schicht des Follenkörpers aufliegt. Die Erfindung wird weiter von einem Foliensystem bestehend aus einem Substratkörper und einem Folienkörper gelöst, bei dem der Folienkörper des Foliensystems aus zwei oder mehr Schichten besteht und eine aus einem Flüssigkristall-Material bestehende LCP-Schicht aufweist, bei dem der Substratkörper des Folienkörpers eine Orientierungs-Schicht zur Orientierung von Flüssigkristallen aufweist und bei dem der Folienkörper nach einer Individualisierung der Orientierungs-Schicht des Substratkörpers derart auf die individualisierte Orientierungs-Schicht aufgebracht ist, dass die LCP-Schicht des Folienkörpers auf der individualisierten Orientierungs-Schicht zur Orientierung von Flüssigkristallen der LCP-Schicht des Folienkörpers aufliegt.

Durch die Erfindung wird der Vorteil erzielt, dass eine kostengünstige dezentrale Personalisierung von LC-Sicherheitselementen (LC = Liquid Crystal) ermöglicht wird. Die Personalisierung von optischen Sicherheitselementen ist dezentral mit geringem apparativem Aufwand möglich, wobei gleichzeitig ein individualisiertes optisch variables Sicherheitselement erzeugt wird, das in seiner Kopiersicherheit, Abnutzungsbeständigkeit und Handhabbarkeit einem in Massenproduktion gefertigten optisch variablen Sicherheitselement nicht nachsteht. Weitere Vorteile ergeben sich dadurch, dass bereits vorhandene Apparaturen zur dezentralen Personalisierung von Sicherheitselementen mit geringem Nachrüstungsaufwand für die Umsetzung des erfindungsgemässen Verfahrens verwendbar sind, wodurch sich weitere Kostenvorteile ergeben.

Vorteilhafte Ausgestaltungen der Erfindung sind in den Unteransprüchen bezeichnet.

Der Folienkörper weist vorzugsweise eine Trägerschicht und eine physikalisch getrocknete aber noch nicht vernetzte LCP-Schicht auf. Hierdurch wird ein schneller und reibungsloser Ablauf des erfindungsgemässen Verfahrens gewährleistet. Sofort nach dem Aufbringen des Folienkörpers auf den Substratkörper kann eine Ausrichtung des Flüssigkristall-Materials der LCP-Schicht des Folienkörpers an der individualisierten Orientierungsschicht des Substratkörpers bewirkt werden. Hierzu wird vorzugsweise die LCP-Schicht des Folienkörpers nach Aufbringen des Folienkörpers durch thermische Erwärmung I verflüssigt, so dass eine Ausrichtung der Flüssigkristalle der LCP-Schicht des Folienkörpers an der individualisierten Orientierungsschicht des Substratkörpers erfolgt. Da die unvernetzte physikalisch getrocknete LCP-Schicht klebrig ist, kann über Adhäsion eine Haftung zwischen Folienkörper und Substratkörper erzielt werden.

Nach der Ausrichtung der Flüssigkristall-Moleküle der LCP-Schicht wird die LCP-Schicht beispielsweise mittels UV-Aushärtung fixiert. Thermisch vernetzbare Systeme oder Systeme, die bei Temperatureinwirkung verflüssigt werden, sind ebenfalls denkbar.

Hierbei sind weitere Vorteile dadurch erzielbar, dass die Orientierungs-Schicht des Substratkörpers UV-funktionelle Gruppen aufweist. Nach Fixierung der LCP-Schicht durch UV-Aushärtung sorgen diese Gruppen für eine noch stärkere Haftung, z.B. durch chemische Bindung, zwischen Folienkörper und Substratkörper.

Gemäss eines bevorzugten Ausführungsbeispiels der Erfindung weist der SubstratKörper eine oder mehrere weitere Schichten auf, die optische Sicherheitsmerkmale generieren. Derartige Schichten können beispielsweise diffraktive Strukturen aufweisen, die beugungsoptische Sicherheitsmerkmale, beispielsweise Hologramme, zur Verfügung stellen. Weiter kann es sich bei diesen Schichten auch um Dünnfilmschichten handeln, die blickwinkelabhängige Farbverschiebungen mittels Interferenzerscheinungen bereitstellen. Neben dem Substratkörper können hierbei auch der Folienkörper oder der Substratkörper und der Folienkörper derartige Schichten aufweisen.

Durch diese zusätzlichen Schichten, die bevorzugt oberhalb der LCP-Schicht, d.h. zwischen Betrachter und LCP-Schicht, angeordnet sind, wird die Fälschungssicherheit des optisch variablen Sicherheitselements stark verbessert. Die Sicherheitselemente können nicht mehr durch einfache Apparaturen, beispielsweise einem Tintenstrahldrucker und einer UV-Lampe mit Polarisator, nachgeahmt oder kopiert werden. Besonders hoch ist hierbei der Sicherheitsstandard, wenn sowohl der Substratkörper als auch der Folienkörper derartige Schichten aufweist. Das individualisierte Sicherheitsmerkmal wird so beidseitig geschützt, und jeder Versuch der Manipulation eines Sicherheitselements beeinflusst eines der übrigen Sicherheitsmerkmale und wird damit erkennbar.

Ein besonders hohes Mass an Sicherheit ergibt sich hierbei, wenn der Substratkörper und der Folienkörper jeweils ein oder mehrere weitere Schichten aufweisen, die sich gegenseitig ergänzende optische Sicherheitsmerkmale generieren.

Die Orientierungs-Schicht des Substratkörpers kann durch verschiedene Massnahmen individualisiert werden.

Als besonders vorteilhaft hat es sich hierbei erwiesen, die Orientierungs-Schicht des Substratkörpers durch partielles Bedrucken der Orientierungs-Schicht zu individualisieren. Durch dieses Bedrucken werden die Rillen der OrientierungsSchicht partiell ausgefüllt, so dass in dem bedruckten Bereich keine Orientierung der LCP-Schicht stattfindet. Diese Vorgehensweise hat den Vorteil, dass der apparative Aufwand für die Individualisierung der Orientierungsschicht besonders gering ist. Weiter können so eine Vielzahl von bereits vorhandenen Apparaturen mit geringem Modifizierungsaufwand leicht zur Herstellung von Personaldokumenten (z.B. Datacard) wieder verwendet werden.

Eine weitere vorteilhafte Möglichkeit der Individualisierung besteht darin, die Orientierungs-Schicht des Substratkörpers durch partielles Übertragen einer unterschiedlich orientierten Orientierungs-Schicht auf die Orientierungs-Schicht des Substratkörpers zu individualisieren. Hierdurch entstehen auf der Orientierungs-Schicht Bereiche mit unterschiedlicher Orientierung, wodurch recht komplexe, individualisierte Sicherheitsmerkmale erzeugbar sind.

Weitere Möglichkeiten der Individualisierung der Orientierungs-Schicht bestehen darin, die Orientierungs-Schicht durch partielle mechanische Abtragung der Orientierungs-Schicht, durch Laser-Ablation, durch partielles thermisches Verformen der Orientierungs-Schicht durch partielle Replikation einer Reliefstruktur in die Orientierungs-Schicht oder durch partielle Belichtung der Orientierungs-Schicht zu individualisieren.

Besonders vorteilhaft ist es, als Folienkörper eine Prägefolie, Laminierfolie oder Stickerfolie zu verwenden. Eine derartige Folie kann beispielsweise mittels eines üblichen Heisspräge- oder Laminierprozesses auf den Substratkörper aufgebracht werden. Durch die Verwendung derartiger Folien als Folienkörper wird eine schnelle und sichere Durchführung des Verfahrens gewährleistet. Weiter können bereits vorhandene Apparaturen, beispielsweise Laminiereinrichtungen, wieder verwendet werden.

Auch als Substratkörper kann eine Präge-, Laminier- oder Stickerfolie verwendet werden, wodurch sich die oben bezeichneten Vorteile ergeben. Dabei hat es sich als vorteilhaft erwiesen, die den Substratkörper bildende Präge-, Laminier- oder Stickerfolie vor Aufbringung des Folienkörpers auf den Substratkörper auf ein Sicherheitselement, beispielsweise einen Reisepass, einen Geldschein, eine Geldkarte oder ein Ticket, aufzubringen.

Im einfachsten Fall ist es jedoch auch möglich, dass der Substratkörper beispielsweise aus einer ein Sicherheitsdokument bildende Trägerschicht und der hierauf (partiell) aufgebrachten Orientierungs-Schicht besteht.

Im Folgenden wird die Erfindung anhand von mehreren Ausführungsbeispielen unter Zuhilfenahme der beiliegenden Zeichnungen beispielhaft erläutert.
- Fig. 1: zeigt ein Ablauf-Diagramm eines Verfahrens zur Herstellung eines individualisierten, optisch variablen Elements.
- Fig. 2a: zeigt eine schematische Darstellung eines Folienkörpers.
- Fig. 2b: zeigt eine schematische Darstellung eines Substratkörpers.
- Fig. 3a: zeigt eine schematische Darstellung eines Substratkörpers mit einer individualisierten Orientierungs-Schicht.
- Fig. 3b: zeigt eine Schnitt-Darstellung einer Transferfolie zur Individualisierung einer Orientierungs-Schicht eines Substratkörpers.
- Fig. 3c: zeigt eine schematische Darstellung einer individualisierten Orientierungs-Schicht.
- Fig. 4: zeigt eine schematische Darstellung eines Substratkörpers mit einem auf diesem aufgebrachten Folienkörper.
- Fig. 5: zeigt eine schematische Darstellung eines optisch variablen Elements.
- Fig. 6a: zeigt eine schematische Darstellung eines Folienkörpers für ein weiteres Ausführungsbeispiel der Erfindung.
- Fig. 6b: zeigt eine schematische Darstellung eines Sicherheitsdokuments mit einem Substratkörper für ein weiteres Ausführungsbeispiel der Erfindung.
- Fig. 7a: zeigt eine schematische Darstellung eines Folienkörpers für ein weiteres Ausführungsbeispiel der Erfindung.
- Fig. 7b: zeigt eine schematische Darstellung eines Substratkörpers für ein weiteres Ausführungsbeispiel der Erfindung.

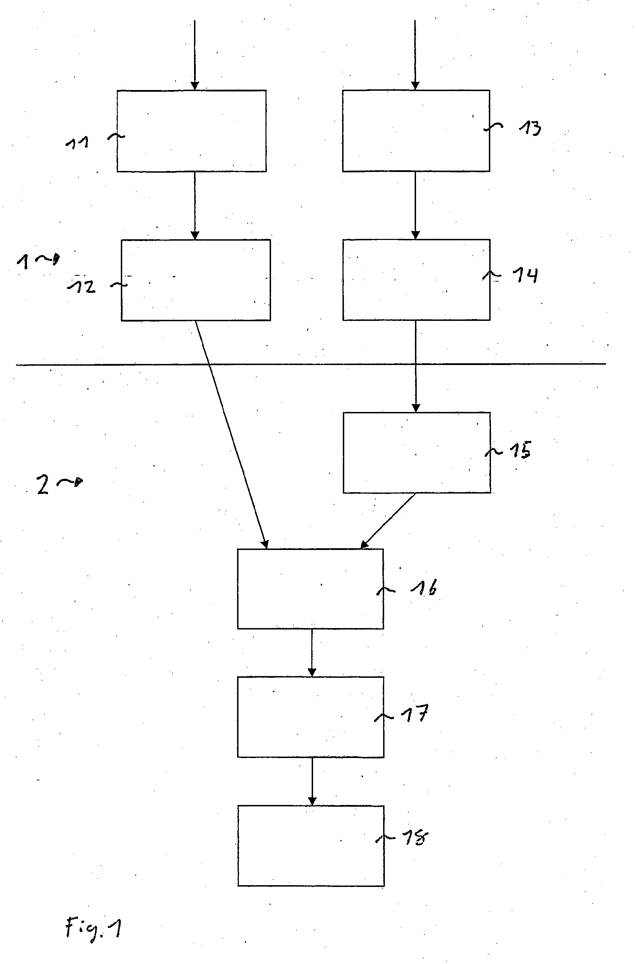

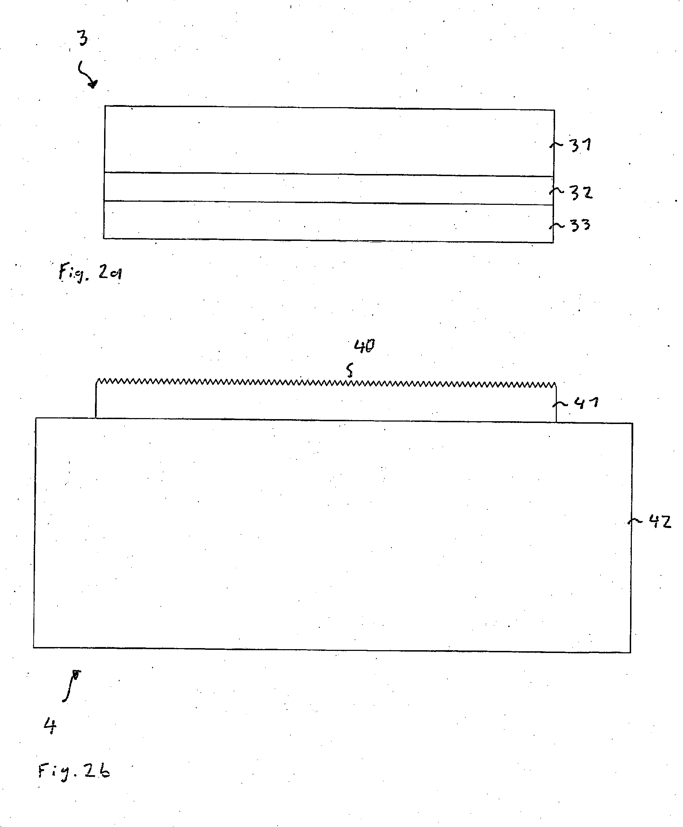

Fig. 1 zeigt ein Ablauf-Diagramm eines Verfahrens zur Herstellung eines individualisierten optisch variablen Elements mit mehreren Verfahrensschritten 11 bis 18. Die einzelnen Verfahrensschritte 11 bis 18 werden hierbei im Folgenden anhand der begleitenden Zeichnungen Fig. 2a bis Fig. 5 erläutert. Die Verfahrensschritte 11 bis 14 stellen Verfahrensschritte eines zentralen Teil-Verfahrens 1 und die Verfahrensschritte 15 bis 18 Verfahrensschritte eines dezentralen Teil-Verfahrens 2 dar. Das zentrale Teil-Verfahren 1 mündet in der Bereitstellung von Folienkörpern und Substratkörpern, aus denen dann in dem dezentralen Teil-Verfahren 2 ein individualisiertes optisch variables Element generiert wird.

Die Verfahrensschritte des zentralen Teil-Verfahrens 1 werden in industriellen Herstellungsprozessen durchgeführt.

Mittels der Verfahrensschritte 11 und 12 wird ein in Fig. 2a gezeigter Folienkörper 3 mit drei Schichten 31, 32 und 33 erzeugt. Bei dem Folienkörper 3 handelt es sich um eine Prägefolie. Es kann sich bei dem Folienkörper 3 jedoch ebenfalls um eine Laminierfolie oder Stickerfolie handeln.

Der Folienkörper 3 weist drei Schichten 31, 32 und 33 auf. Bei der Schicht 31 handelt es sich um eine Trägerschicht, die beispielsweise von einer Polyesterfolie mit einer Dicke von 19 µm bis 23 µm gebildet wird. Auf die Trägerschicht 31 wird in dem Verfahrensschritt 11 die Schicht 32 beispielsweise mittels eines Tiefdruckverfahrens aufgebracht. Bei der Schicht 32 handelt es sich um eine LCP-Schicht (LCP = Liquid Crystal Polymers), die aus einem strahlen- oder anders härtenden Flüssigkristall-Material besteht. Als Flüssigkristall-Material können beispielsweise die in US 5 389 698 A, US 5 602 661 A, EP 0 689 084 A, EP 0 689 065 A, WO 98/52077 und WO 00/29878 beschriebenen Flüssigkristall-Materialien Verwendung finden. Vorzugsweise wird für die Schicht 32 hierbei Merck RMM 129 oder OPALVA^{®} (Vantico-Basel) als Flüssigkristall-Material verwendet:

Das Flüssigkristall-Material wird hierbei bevorzugt in einem Auftragsgewicht von 0,5 bis 3 g/m² auf die Trägerfolie 31 aufgebracht. In dem Verfahrensschritt 12 erfolgt sodann eine physikalische Trocknung des lösungsmittelhaltigen LCP-Materials der Schicht 32. Die Trocknung erfolgt hierbei beispielsweise in einem Trocknungskanal bei einer Temperatur von 100 bis 120 °C.

Es ist hierbei auch möglich, dass die LCP-Schicht 32 nicht vollflächig, sondern partiell musterförmig auf die Schicht 31 mittels einer entsprechend ausgeformten Tiefdruck-Rasterwalze aufgebracht wird. Hierdurch ist es möglich, bereits in der noch nicht individualisierten LCP-Schicht ein komplexes Muster vorzusehen, das als zusätzliches Sicherheitsmerkmal dienen kann.

Anschliessend wird die Schicht 33 auf die getrocknete Schicht 32 aufgebracht. Bei der Schicht 33 handelt es sich um ein Silikonpapier, das die klebrige Oberfläche der LCP-Schicht 32 schützt.

Es ist auch möglich, dass zwischen den Schichten 31 und 32 eine Ablöse- und/oder Schutzlackschicht vorgesehen wird, die ein besseres Ablösen der Trägerschicht 31 von der LCP-Schicht 32 bzw. einen physikalischen Schutz der Schicht 32 gewährleistet.

Mittels der Verfahrensschritte 13 und 14 wird ein in Fig. 2b gezeigter Substratkörper 4 hergestellt. Bei dem Substratkörper 4 handelt es sich um eine Stickerfolie, die natürlich noch weitere Schichten aufweisen kann. Es kann sich bei dem Substratkörper 4 jedoch auch um eine Präge- oder Laminierfolie handeln.

Der Substratkörper 4, d.h. die Schicht 42, kann auch bereits direkt strukturiert sein (z.B. durch Laser-Ablation). Weiter kann der Substratkörper 4 auch von einer PVC-Karte gebildet werden.

Der Substratkörper 4 weist eine Orientierungs-Schicht 41 mit einer Reliefstruktur 40 und eine Trägerschicht 42 auf.

Bei der Trägerschicht 42 handelt es sich beispielsweise um eine PET- oder BOPP-Folie einer Schichtdicke von 10 µm bis 50 µm. Auf die Trägerfolie 42 wird in dem Verfahrensschritt 13 die Orientierungs-Schicht 41 vollflächig, beispielsweise mit einer Tiefdruck-Rasterwalze aufgebracht.

Bei der Schicht 41 handelt es sich um eine Replizierschicht, in die mittels eines Prägewerkzeuges die Reliefstruktur 40 eingeprägt wird. Die Schicht 41 besteht hierbei vorzugsweise aus einem transparenten, thermoplastischen Kunststoffmaterial. Beispielsweise hat der für die Schicht 41 verwendete Replizierlack folgende Zusammensetzung:

| Komponente | Gewichtsteile |
|---|---|
| Hochmolekulares PMMA-Harz | 2000 |
| Silikonalcyl, ölfrei | 300 |
| Nichtionisches Netzmittel | 50 |
| Niedrigviskose Nitrozellulose | 750 |
| Methylethylketon | 1200 |
| Toluol | 2000 |
| Diaceton-Alkohol | 2500 |

Dieser Replizierlack wird beispielsweise mittels einer Linienraster-Tiefdruckwalze in einem Auftragsgewicht von 2,2 g/m² nach Trocknung aufgebracht. Die Trocknung erfolgt im Trockenkanal bei einer Temperatur von 100 bis 120 °C.

In dem Verfahrensschritt 14 wird nun in die Schicht 41 bei etwa 130 °C mittels einer beispielsweise aus Nickel bestehenden Matrize die der Orientierung von Flüssigkristallen dienende Reliefstruktur 40 eingeprägt. Beim Prägen der Reliefstruktur 40 wird die Matrize vorzugsweise elektrisch aufgeheizt. Vor am Abheben der Matrize von der Schicht 41 nach der Prägung kann die Matrize wieder abgekühlt werden. Nach Einprägung der Reliefstruktur 40 erhärtet der Replizierlack durch Vernetzung oder in sonstiger Weise.

Die Reliefstruktur 40 besteht hier beispielsweise aus einer Vielzahl von nebeneinander angeordneten, parallelen Rillen, die eine Orientierung von Flüssigkristall-Molekülen ermöglichen. Die Spatialfrequenz der Reliefstruktur 40 beträgt hierbei bevorzugt 300 bis 3.000 Linien/mm und die Profiltiefe der Rillen beträgt bevorzugt 200 nm bis 600 nm.

Es ist jedoch auch möglich, dass die Orientierungsschicht 41 von einer belichteten Photopolymerschicht gebildet wird. Prinzipiell sind hierfür sämtliche Photopolymere verwendbar, deren Orientierungs-Eigenschaften durch Bestrahlung mit polarisiertem Licht festlegbar sind. Beispiele derartiger Photopolymere (LPP = Linearily Photopolymerisized Polymeres) werden beispielsweise in EP 0 611 786 A, WO 96/10049 und EP 0 763 552 A beschrieben. Weiter sind auch die in EP 1 227 347 A1 beschriebenen Photopolymere hierfür verwendbar.

Die Photopolymerschicht wird in dem Verfahrensschritt 13 mittels eines nasschemischen Verfahrens auf die Trägerschicht 42 aufgebracht. Vorzugsweise erfolgt das Aufbringen der Photopolymerschicht hierbei mittels eines Tiefdruckverfahrens. Die Photopolymerschicht wird sodann getrocknet und in dem Verfahrensschritt 14 mit polarisiertem UV-Licht belichtet, so dass die Reliefstruktur 40 in der Orientierungs-Schicht 41 erzeugt wird, die eine Orientierung von Flüssigkristall-Molekülen ermöglicht.

Auch hier ist es möglich, dass die Orientierungs-Schicht 41 bereits musterförmig auf die Trägerschicht 42 aufgedruckt wird, um so bereits vor einer Individualisierung der Orientierungs-Schicht ein als weiteres Sicherheitsmerkmal fungierendes komplexes Muster in die Orientierungs-Schicht 41 einzubringen. Weiter ist es auch möglich, durch eine entsprechende Ausformung der Reliefstruktur 40 einen derartigen Effekt zu erzielen.

In dem dezentralen Teil-Verfahren 2 wird nun dezentral und unter Zuhilfenahme einfacher Apparaturen mittels des Substratkörpers 4 und des Folienkörpers 3 ein individualisiertes optisch variables Element hergestellt.

Hierzu wird in dem Verfahrensschritt 15 die Orientierungs-Schicht 41 des Substratkörpers 4 individualisiert.

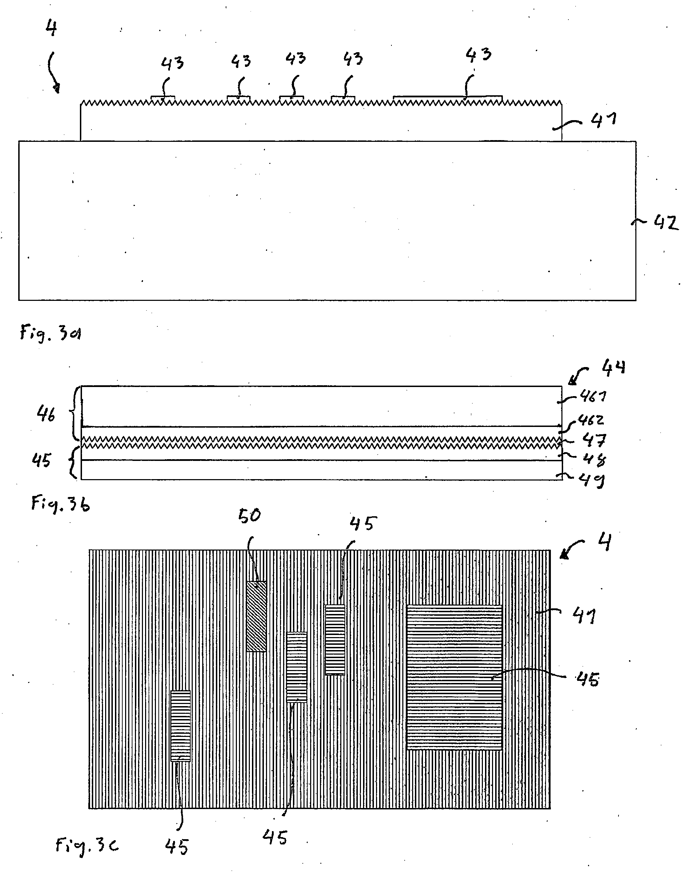

Eine erste Möglichkeit der Individualisierung der Orientierungs-Schicht 41 wird im Folgenden anhand von Fig. 3a erläutert:
Fig. 3a zeigt den Substratkörper 4 mit der Trägerschicht 42 und der Orientierungsschicht 41. Auf der Örientierungsschicht 41 ist bereichsweise eine Druckschicht 43 aufgebracht, die die Rillen der Reliefstruktur 40 ausfüllt. Durch eine derartige farbige oder farblose Bedruckung, beispielsweise mittels eines TTF-Druckers oder eines Tintenstrahldruckers, werden gezielt Bereiche der Orientierungs-Schicht 41 abgedeckt bzw. durch Auffüllung ausgelöscht. In den durch den Druck deaktivierten Bereichen des Photopolymers bzw. in den durch den Druck aufgefüllten Bereichen der Oberflächenstruktur kommt es später zu keiner Ausrichtung des Flüssigkristall-Materials, so dass in diesen Bereichen eine isotrope Verteilung der Flüssigkristall-Moleküle vorherrscht. Unter dem Polarisator erhält man in den nicht bedruckten Bereichen aufgrund der Orientierung des Flüssigkristall-Materials eine "JA-/NEIN"-Information, in den durch Bedruckung deaktivierten bzw. ausgefüllten Bereichen haben die Flüssigkristalle keine Vorzugsorientierung und weisen damit keine optisch aktiven Information auf.

Auf ähnliche Art und Weise kann eine Individualisierung der Orientierungs-Schicht 41 erfolgen, indem die Orientierungs-Schicht 41 partiell (teilweise) abgetragen wird. So kann in dem Verfahrensschritt 15 beispielsweise mittels eines Fräskopfes oder eines sonstigen, materialabtragenden Werkzeuges die Reliefstruktur 40 partiell abgetragen werden, wodurch sich in dem Bereich der Abtragung im Späteren eine isotrope Verteilung der Flüssigkristall-Moleküle und damit eine Auslöschung der optischen Information ergibt. Eine derartige Auslöschung lässt sich auch durch thermische Abtragung, beispielsweise mittels eines Lasers, erzielen.

Eine weitere Möglichkeit besteht darin, durch partielle thermische Bearbeitung der Oberfläche der Orientierungsschicht 41 die Reliefstruktur 40 partiell rückzuformen und damit ihre flüssigkristall-orientierenden Eigenschaften partiell auszulöschen.

Weiter ist es auch möglich, als Orientierungs-Schicht 41 eine nicht oder nur teilweise belichtete LPP-Schicht zu verwenden und diese Schicht dann in dem Verfahrensschritt 15 mittels eines oder mehrerer Belichtungsschritte zu personalisieren. Hierbei kann dieses Verfahren auch mit dem zu Fig. 3a geschilderten Verfahren kombiniert werden, so dass beispielsweise eine nicht oder nur teilweise belichtete Photopolymerschicht zuerst mit einer eine spätere Orientierung durch Beschichtung verhindernden Schicht bedruckt wird und sodann mit polarisiertem Licht bestrahlt wird.

Weiterhin ist es möglich, dass die Reliefstruktur 40 der Orientierungs-Schicht 41 mittels eines Prägestempels partiell gelöscht wird. Dieser Prägestempel kann neben einer blossen Auslöschung der Reliefstruktur 40 weiter auch eine neue, anders orientierte Reliefstruktur in die Orientierungs-Schicht 41 einprägen. Hierdurch lassen sich dann auch Bereiche mit unterschiedlich orientierten Flüssigkristall-Molekülen erzeugen.

Durch Kombination mit einer Retarderschicht, die polarisierende Eigenschaften besitzt, kann bei Bedarf auch ein LC-basiertes Element mit Kontrastwechsel generiert werden. Diese Retarderschicht kann hierbei Teil des Substratkörpers 4 sein und beispielsweise direkt unterhalb der Orientierungsschicht 41 angeordnet sein. Sie kann auch Teil des auf dem Substraktkörper verbleibenden Teils des Folienkörpers 3 sein und beispielsweise direkt oberhalb der LCP-Schicht 32 angeordnet sein.

Die Retarderschicht wird beispielsweise von einer zusätzlichen, entsprechend orientierten und fixierten LC-Schicht gebildet. Die Retarderschicht kann jedoch auch eine Schicht aus einem geeignetes Trägermaterial sein, das für polarisiertes Licht Birefringence zeigt, d.h. richtungsabhängig unterschiedliche Brechzahlen aufweist. So kann die Retarderschicht beispielsweise auch von der Trägerschicht 42 gebildet werden, falls diese aus einem entsprechenden Material gefertigt ist. Weiter kann die Retarderschicht auch aus einem sonstigen Material gefertigt werden, das polarisierende oder polarisationsabhängige Eigenschaften besitzt.

Der von der orientierten LC-Schicht 32 generierte Polarisationseffekt und der von der Retarderschicht generierte Polarisationseffekt überlagern sich, so dass in den Bereichen, in denen die LC-Schicht 32 aufgrund der Individualisierung der Orientierungs-Schicht 41 keine polarisierende Eigenschaften zeigt, die Polarisation des Lichts von der Retarderschicht bestimmt wird, und ansonsten die Polarisation des Lichts von den Eigenschaften der Retarderschicht und der LC-Schicht 32 bestimmt wird. Die Polarisationsrichtung der Retarderschicht wird nun vorzugsweise so gewählt, dass sie im 45° Winkel zur Orientierungsrichtung der Flüssigkristallmoleküle steht. Die zusätzliche Retarderschicht, die beispielsweise als transparentes Overlay über der partiell orientierten LC-Schicht liegt, bewirkt, dass auch in den durch die Individualisierung deaktivierten Bereichen der Orientierungsschicht eine optisch aktive Information ("Hell/Dunkel"-Effekt) generiert wird. Im Zusammenspiel mit der "JA/NEIN"-Information durch die LC-Schicht erhält man somit ein LC-basiertes Element, das Visualisiert mit einem Polarisator unter Drehung des Polarisators einen Kontrastwechsel zeigt. Die mit einer Retarderschicht kombinierten LC-Elemente können dabei reflektiver oder transmissiver Natur sein.

Anhand von Fig. 3b und Fig. 3c wird nun eine weitere Möglichkeit der Individualisierung der Orientierungs-Schicht 41 erläutert. Bei dem Verfahren nach den Fig. 3b und 3c wird hierbei durch die partielle Übertragung einer weiteren, bereits vororientierten Photopolymerschicht oder Replizierschicht auf die Orientierungs-Schicht 41 eine individuelle Orientierung der Orientierungs-Schicht 41 erzielt.

Fig. 3b zeigt eine Transferfolie 44 mit einer Träger 46, einer Ablöseschicht 47, einer Replizierschicht 48 und einer Klebeschicht 49.

Der Träger 46 besteht aus einer Trägerfolie 461 und einer Replizierlackschicht 462 mit einer replizierten Struktur.

Die Replizierschicht 48 ist beispielsweise wie die in Fig. 2b erläuterte Replizierschicht ausgeformt und weist eine eingeprägte Reliefstruktur auf, die eine Orientierung von Flüssigkristall-Molekülen ermöglicht. Bei der Klebeschicht 49 handelt es sich beispielsweise um einen thermisch aktivierbaren Kleber. Die Transferfolie 44 wird nun partiell beispielsweise mittels eines entsprechenden Prägestempels auf die Orientierungs-Schicht 41 aufgebracht. So zeigt Fig. 3c den Substratkörper 4 mit der Orientierungs-Schicht 41, auf die in Bereichen 45 die Transferfolie in einer zur Orientierung der Orientierungs-Schicht 41 senkrechten Orientierung und in einem Bereich 50 in einer zur Orientierung der Orientierungs-Schicht 41 um 45° verdrehten Richtung aufgebracht ist. Nach Aufbringen der Transferfolie 44 wird die Trägerfolie 46 entfernt, so dass in den Bereichen 45 und 50 die Reliefstruktur der Replizierschicht 48 die wirksame Oberflächenstruktur bildet. Wie in Fig. 3c erkennbar, können durch ein derartiges partielles Applizieren einer weiteren Orientierungs-Schicht Bereiche mit unterschiedlicher Orientierung der Orientierungs-Schicht individuell erzeugt werden. So können auch Bilder mit Kontrast-Umkehr erzeugt werden.

Anstelle einer Replizierschicht mit eingeprägter Reliefstruktur kann für die Schicht 48 natürlich auch eine belichtete Photopolymerschicht verwendet werden.

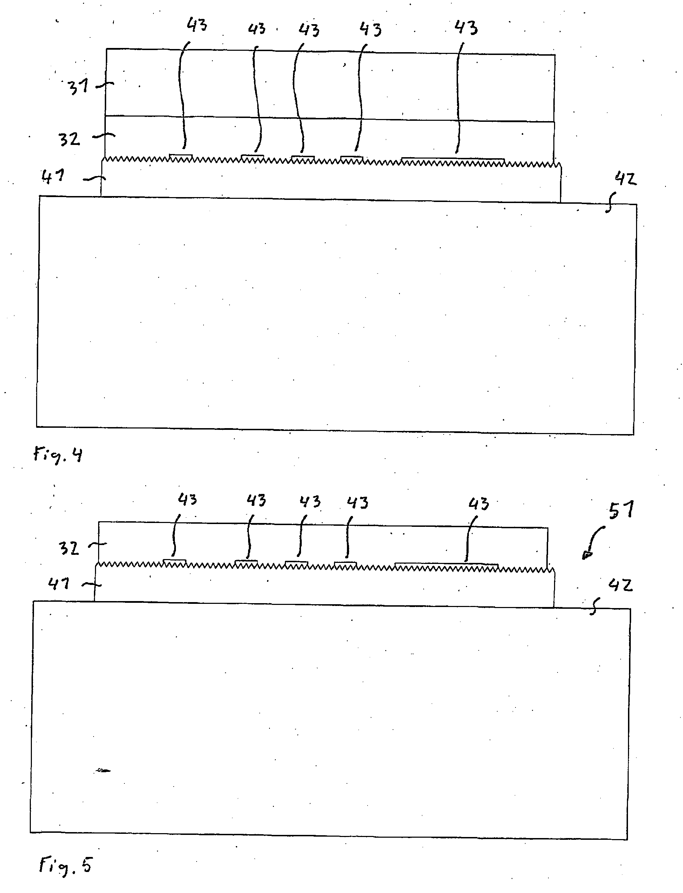

In dem Verfahrensschritt 16 wird nun auf den Substratkörper 4 der Folienkörper 3 aufgebracht. Hierzu wird die aus Silikonpapier bestehende Schutzschicht 33 von dem Folienkörper 3 abgezogen und sodann der verbleibende Folienkörper auf den Substratkörper 44 gegenkaschiert. Aufgrund der guten Haftfähigkeit der physikalisch getrockneten LCP-Schicht 32 ergibt sich hier bereits ohne weitere Massnahmen eine stabile Verbindung zwischen Substratkörper und Folienkörper. In Fig. 4 ist der sich nach Durchführung des Verfahrensschritts 16 ergebende Folienkörper gezeigt. Der Folienkörper weist die Trägerschicht 42, die Orientierungs-Schicht 41 mit der partiellen Druckschicht 43, die LCP-Schicht 32 und die Trägerschicht 31 auf.

In dem Verfahrensschritt 17 wird nun dem in Fig. 4 dargestellten Mehrschicht-Körper Wärme zugeführt, um eine Orientierung der Flüssigkristall-Moleküle der LCP-Schicht 32 an der individualisierten Orientierungs-Schicht 41 zu bewirken. Unter Zufuhr von Wärme verflüssigt sich die LCP-Schicht 32, so dass eine Ausrichtung der Flüssigkristall-Moleküle der LCP-Schicht 32 an der individualisierten Orientierungs-Schicht 41 erfolgen kann.

In dem Verfahrensschritt 18 wird die nun orientierte LCP-Schicht 32 durch die Trägerschicht 31 hindurch mit UV-Licht belichtet. Für die Belichtung wird vorzugsweise UV-Licht in einem Wellenbereich von 280 bis 365 nm verwendet. Durch diese UV-Belichtung erfolgt eine UV-Fixierung des Flüssigkristall-Materials.

Der Träger verhindert dabei eine Inhibierung durch Sauerstoff, so dass die üblicherweise bei LCPs notwendige Strahlenhärtung unter Inertbedingungen enfällt.

Nach der UV-Fixierung der LCP-Schicht 32 wird die Trägerschicht 31 von dem Mehrschicht-Körper abgezogen, so dass sich das in Fig. 5 dargestellte optisch variable Element 51 mit der Trägerschicht 42, der individualisierten Orientierungs-Schicht 41 mit der partiellen Druckschicht 43, und der orientierten LCP-Schicht 32 ergibt.

Es ist auch möglich, dass die Trägerschicht 31 auf der LCP-Schicht 32 belassen wird, und beispielsweise als Schutzschicht zum Schutz der LCP-Schicht 32 zu dienen.

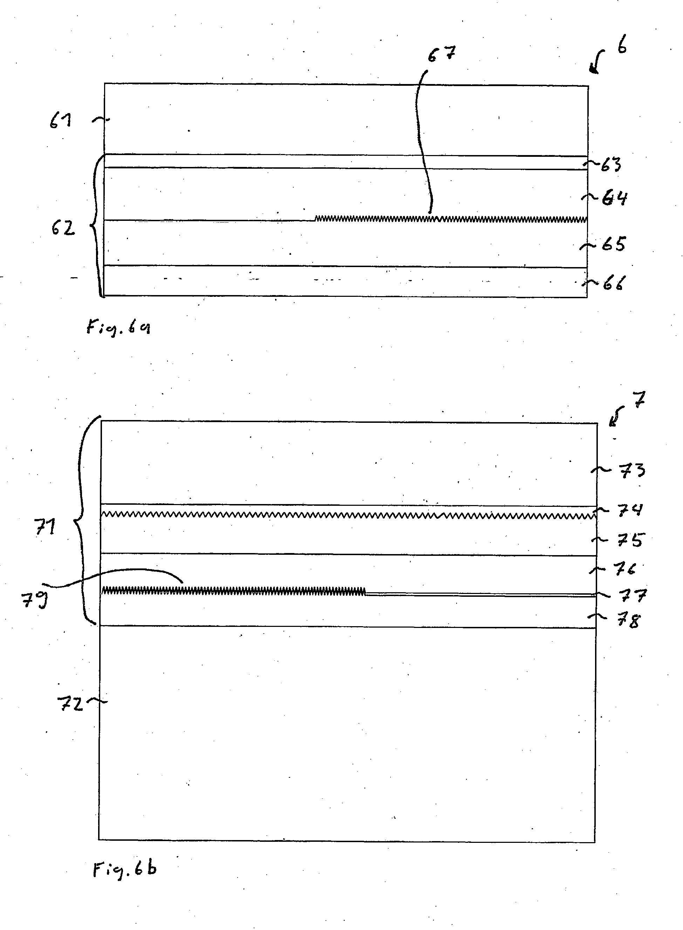

Anhand der Figuren 6a und 6b werden nun weitere Ausführungsbeispiele eines erfindungsgemässen Foliensystems erläutert.

Fig. 6a zeigt einen Folienkörper 6 mit einer Trägerschicht 61 und einer Übertragungslage 62, die eine Ablöse- und Schutzlackschicht 63, eine Replizierschicht 64, eine LCP-Schicht 65 und eine Schutzschicht 66 aufweist. Die Trägerschicht 61, die LCP-Schicht 65 und die Schutzschicht 66 sind wie die Schichten 31,32 und 33 nach Fig. 2a ausgestaltet.

Bei der Schicht 64 handelt es sich um eine Replizierschicht, in die bereichsweise eine diffraktive Struktur 67 eingeprägt ist. Die für die Schichten 64 und 65 verwendeten Materialien unterscheiden sich hierbei in ihrem Brechungsindex, so dass durch die diffraktive Struktur 67 ein transparentes, beugungsoptisches Sicherheitsmerkmal erzeugt wird. So ist es beispielsweise möglich, dass durch die diffraktive Struktur 67 ein Hologramm oder ein Kinegram^{®} erzeugt wird.

Fig. 6b zeigt ein Sicherheitsdokument 72, das beispielsweise von einem (bedruckten) Plastik- und/oder Papierkörper gebildet wird. Ein derartiges Sicherheitsdokument kann beispielsweise als Pass, Personalausweis, Werksausweis, Kreditkarte, Geldkarte oder Ticket Verwendung finden.

Weiter zeigt Fig. 6b einen Substratkörper 71, der auf das Sicherheitsdokument 72 aufgebracht ist. Der Substratkörper 71 weist eine Trägerschicht 73, eine Ablöseschicht 74, eine Orientierungs-Schicht 75, eine Replizierschicht 76, eine Reflexionsschicht 77 und eine Klebeschicht 78 auf.

Die Trägerschicht 73 ist wie die Trägerschicht 31 nach Fig. 2a ausgebildet. Die Orientierungs-Schicht 75 ist wie die Orientierungs-Schicht 41 nach Fig. 2b ausgebildet. Bei der Replizierschicht 76 handelt es sich um eine Replizierschicht, in die partiell eine diffraktive Struktur 79 abgeformt ist. Die Reflexionsschicht 77 besteht aus einer dünnen, aufgedampften Metallschicht. Als Material für die Metallschicht kommt im wesentlichen Chrom, Aluminium, Kupfer, Eisen, Nickel, Silber, Gold oder eine Legierung mit diesen Materialien in Frage. Weiter kann es sich bei der Reflexionsschicht 77 auch um eine HRI-Schicht (HRI = High Refraction Index) handeln.

Damit wird in dem Bereich der diffraktiven Struktur 79 ein reflektives, beugungsoptisch wirksames Sicherheitselement, beispielsweise ein Hologramm oder ein Kinegram^{®}, erzeugt. Es ist natürlich auch möglich, dass die Reflexionsschicht 77 nur partiell ausgestaltet ist und damit beispielsweise bereichsweise ein transparentes Fenster zur Sichtbarmachung von Elementen des Sicherheitsdokuments 72 aufweist.

Die Klebeschicht 78 besteht beispielsweise aus einer Schicht aus einem thermisch aktivierbaren Kleber.

In dem zentralen Teil-Verfahren wird nun der Folienkörper 6 durch Aufbringen der Ablöse-/Schutzlackschicht 63 auf die Trägerschicht 61, Aufdrucken einer Replizierlackschicht, Trocknen der Replizierlackschicht und Replikation der diffraktiven Struktur 67, Aufdrucken der LCP-Schicht 64 und physikalische Trocknung der LCP-Schicht 65 und Aufbringung der Schutzschicht 66 hergestellt. In dem dezentralen Teil-Verfahren wird nun der Substratkörper 71 auf das Sicherheitsdokument 72 (evtl. nach Individualisierung des Sicherheitsdokuments 72) aufgebracht. Sodann wird die Trägerschicht 73 zusammen mit der Ablöseschicht 74 von dem Substratkörper 71 abgezogen und die Orientierungs-Schicht 75, wie in den Ausführungen zu den Figuren Fig. 3a bis Fig. 3c erläutert, individualisiert. Anschliessend wird die Schutzschicht 66 von dem Folienkörper 6 abgezogen und der Folienkörper 6 mit der Schicht 65 voran auf die Schicht 75 des Substratkörpers 71 kaschiert.

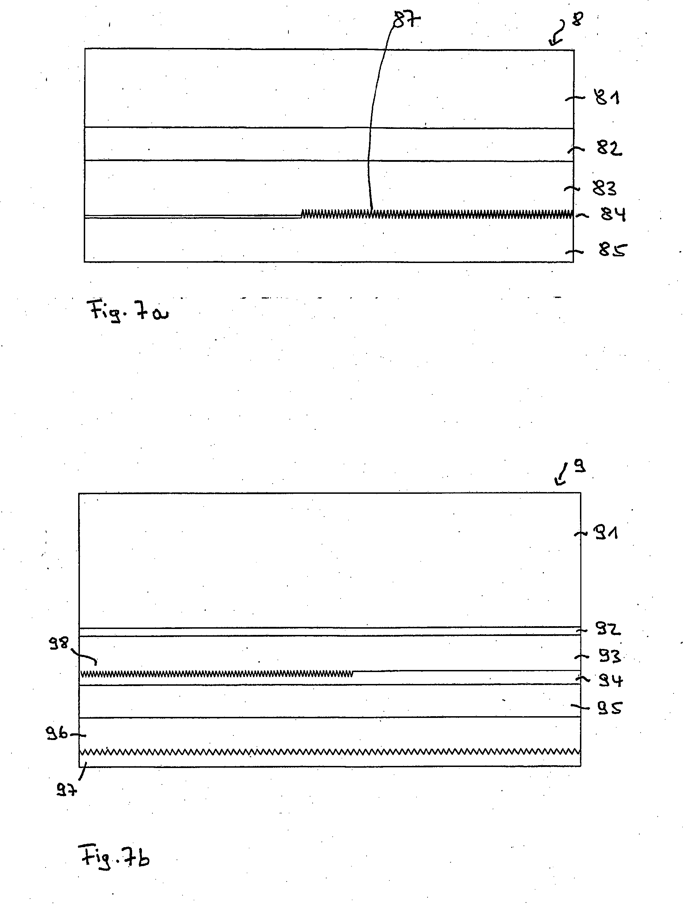

Anhand der Fig. 7a und Fig. 7b werden nun weitere Ausführungsbeispiele erfindungsgemässer Foliensysteme erläutert.

Fig. 7a zeigt einen Folienkörper 8 mit einer Trägerschicht 81, einer LCP-Schicht 82, einer Replizierschicht 83, einer Reflexionsschicht 84 und einer Klebeschicht 85.

Die Trägerschicht 81, die LCP-Schicht 82 und die Replizierschicht 83 sind wie die Schichten 61, 65 und 64 nach Fig. 6a ausgestaltet. Die Reflexionsschicht 84 und die Klebeschicht 85 sind wie die Schichten 77 und 78 nach Fig. 6b ausgestaltet. In der Replizierschicht 83 ist bereichsweise eine diffraktive Struktur 87 abgeformt, die ein reflektives optisches Sicherheitselement bereitstellt.

Fig. 7b zeigt einen Substratkörper 9, der eine Trägerschicht 91, eine Ablöse- und/oder Schutzlackschicht 92, eine Replizierschicht 93, eine Absorptionsschicht 94 und eine Distanzschicht 95 eines Dünnfilmschicht-Systems, eine Orientierungs-Schicht 96 und eine Schutzschicht 97 aufweist. Die Trägerschicht 91, die Replizierschicht 93 und die Orientierungs-Schicht 96 sind hierbei wie die Schichten 73, 76 und 75 nach Fig. 6b ausgestaltet. Die Replizierschicht 93 weist in einem Bereich eine diffraktive Struktur 98 auf, die in dem Bereich der diffraktiven Struktur ein transparentes, beugungsoptisch wirkendes Sicherheitselement generiert. Das Dünnfilmschicht-System besteht aus der Absorptionsschicht 94 und der Distanzschicht 95 und generiert ein transparentes optisches Sicherheitselement, das blickwinkelabhängige Farbverschiebungen mittels Interferenz erzeugt.

Der Folienkörper 8 und der Substratkörper 9 werden in dem zentralen Teil-Verfahren hergestellt. In dem dezentralen Teil-Verfahren wird sodann der Substratkörper 8 mit der Klebeschicht 85 voran auf ein Sicherheitsdokument aufgeklebt. Sodann wird die Trägerfolie 81 von der Übertragungslage entfernt. Im folgenden Schritt wird die Schutzschicht 97 von der Orientierungs-Schicht 96 des Substratkörpers 9 entfernt und gemäss einem der zu den Figuren Fig. 3a bis Fig. 3c beschriebenen Verfahren individualisiert. Sodann wird der Substratkörper 9 mit der individualisierten Orientierungs-Schicht 96 voran auf die LCP-Schicht 82 des Folienkörpers 8 aufgebracht und der Substratkörper 9 auf den Folienköper 8 kaschiert.

Die von den beugungsoptisch wirksamen Strukturen 87 und 98 erzeugten optischen Sicherheitsmerkmale stellen hierbei sich gegenseitig ergänzende optische Sicherheitsmerkmale dar. Beispielsweise erzeugen diese beiden diffraktiven Strukturen benachbarte Bereiche einer gemeinsamen Hologramm-Darstellung.

## Patentansprüche

1. Verfahren zur Herstellung eines individualisierten optisch variablen Elements (51) mit polarisierenden Eigenschaften, wobei zur Herstellung des optisch variablen Elements (51) ein aus zwei oder mehr Schichten bestehender Folienkörper (3, 6, 8), der eine aus einem Flüssigkristall-Material bestehende LCP-Schicht (32, 65, 85) aufweist, auf einen Substratkörper (4, 7, 9) aufgebracht wird, der eine Orientierungs-Schicht (41, 75, 96) zur Orientierung von Flüssigkristallen aufweist, wobei die Orientierungs-Schicht (41, 75, 96) des Substratkörpers (4, 7, 9) vor Aufbringen des Folienkörpers auf dem Substratkörper individualisiert wird, und wobei der Folienkörper (3, 6, 8) derart auf die individualisierte Orientierungs-Schicht (41, 75, 96) des Substratkörpers (4, 7, 9) aufgebracht wird, dass die LCP-Schicht (32, 65, 85) des Folienkörpers (3, 6, 8) auf der individualisierten Orientierungsschicht des Substratkörpers zur Orientierung von Flüssigkristallen der LCP-Schicht des Folienkörpers aufliegt.

2. Verfahren nach Anspruch 1,
**dadurch gekennzeichnet ,**
**dass** die Orientierungsschicht (41) des Substratkörpers (4) durch partielles Bedrucken (43) der Orientierungsschicht individualisiert wird.

3. Verfahren nach einem der vorhergehenden Ansprüche,
**dadurch gekennzeichnet,**
**dass** die Orientierungsschicht (41) des Substratkörpers (4) durch partielles Übertragen einer unterschiedlich orientierten Orientierungsschicht (48) auf die Orientierungsschicht (41) des Substratkörpers (4) individualisiert wird.

4. Verfahren nach einem der vorhergehenden Ansprüche,
**dadurch gekennzeichnet,**
**dass** die Orientierungsschicht des Substratkörpers durch partielle mechanische Abtragung der Orientierungsschicht individualisiert wird.

5. Verfahren nach einem der vorhergehenden Ansprüche,
**dadurch gekennzeichnet,**
**dass** die Orientierungsschicht des Substratkörpers durch partielle thermische Verformung der Orientierungsschicht individualisiert wird.

6. Verfahren nach einem der vorhergehenden Ansprüche,
**dadurch gekennzeichnet,**
**dass** die Orientierungsschicht des Substratkörpers durch Replikation einer Reliefstruktur in die Orientierungsschicht individualisiert wird.

7. Verfahren nach einem der vorhergehenden Ansprüche,
**dadurch gekennzeichnet,**
**dass** die Orientierungsschicht des Substratkörpers durch Belichtung der Orientierungsschicht individualisiert wird.

8. Verfahren nach einem der vorhergehenden Ansprüche,
**dadurch gekennzeichnet,**
**dass** eine Ausrichtung des Flüssigkristall-Materials der LCP-Schicht (32) des Folienkörpers (3) an der individualisierten Orientierungsschicht (41) des Substratkörpers (4) bewirkt wird, und dass das ausgerichtete Flüssigkristall-Material der LCP-Schicht (32) sodann fixiert wird.

9. Verfahren nach Anspruch 8,
**dadurch gekennzeichnet,**
**dass** die LCP-Schicht (32) des Folienkörpers (3) nach Aufbringen des Folienkörpers (3) auf den Substratkörper (4) zur Ausrichtung der Flüssigkristalle erwärmt wird.

10. Verfahren nach einem der vorhergehenden Ansprüche,
**dadurch gekennzeichnet,**
**dass** als Substratkörper (71, 9) eine Prägefolie, Laminierfolie oder Stickerfolie verwendet wird.

11. Verfahren nach Anspruch 10,
**dadurch gekennzeichnet,**
**dass** die den Substratkörper (71) bildende Prägefolie, Laminierfolie oder Stickerfolie vor Aufbringung des Folienkörpers (6) auf den Substratkörper (71) auf ein Sicherheitsdokument (72) aufgebracht wird.

12. Verfahren nach einem der Ansprüche 1 bis 9,
**dadurch gekennzeichnet,**
**dass** der Substratkörper (4, 7) eine ein Sicherheitsdokument bildende Trägerschicht (42, 72) aufweist.

13. Verfahren nach einem der vorhergehenden Ansprüche,
**dadurch gekennzeichnet,**
**dass** als Folienkörper (3, 6, 8) eine Prägefolie, Laminierfolie oder Stickerfolie verwendet wird, die in einem Heisspräge- oder Laminierprozess auf den Substratkörper (4, 7, 9) aufgebracht wird.

14. Foliensystem bestehend aus einem Substratkörper (4, 7, 9) und einem Folienkörper (3, 6, 8) zur Bereitstellung eines individualisierten optisch variablen Elements (51) mit polarisierenden Eigenschaften, wobei der Folienkörper (3, 6, 8) des Foliensystems aus zwei oder mehr Schichten besteht und eine aus einem Flüssigkristall-Material bestehende LCP-Schicht (32, 65, 85) aufweist, wobei der Substratkörper (4, 7, 9) des Foliensystem eine Orientierungs-Schicht (41, 75, 96) zur Orientierung von Flüssigkristallen aufweist und wobei der Folienkörper (3, 6, 8) nach einer Individualisierung der Orientierungs-Schicht (41, 75, 96) des Substratkörpers (4, 7, 9) derart auf die individualisierte Orientierungs-Schicht (41, 75, 96) des Substratkörpers (4, 7, 9) aufgebracht ist, dass die LCP-Schicht (32, 65, 85) des Folienkörpers (3, 6, 8) auf der individualisierten Orientierungs-Schicht (41, 75, 96) des Substratkörpers (4, 7, 9) zur Orientierung von Flüssigkristallen der LCP-Schicht (32, 65, 85) des Folienkörpers (3, 6, 8) aufliegt.

15. Foliensystem nach Anspruch 14,
**dadurch gekennzeichnet,**
**dass** die Orientierungs-Schicht des Substratkörpers UV-funktionelle Gruppen zur besseren Haftung des Folienkörpers auf dem Substratkörper aufweist.

16. Foliensystem nach einem der Ansprüche 14 und 15,
**dadurch gekennzeichnet,**
**dass** der Folienkörper (3, 6, 8) eine Trägerschicht (31, 61, 81) und eine physikalisch getrocknete LCP-Schicht (32, 65, 85) aufweist.

17. Foliensystem nach einem der Ansprüche 14 bis 16.
**dadurch gekennzeichnet,**
**dass** der Substratkörper (7,9) eine oder mehrere weitere Schichten (76, 77, 94, 95) aufweist, die optische Sicherheitsmerkmale generieren.

18. Foliensystem nach einem der Ansprüche 14 bis 17,
**dadurch gekennzeichnet,**
**dass** der Folienkörper (6, 8) eine oder mehrere weitere Schichten (64, 83, 84) aufweist, die optische Sicherheitsmerkmale generieren.

19. Foliensystem nach einem der Ansprüche 14 bis 18,
**dadurch gekennzeichnet,**
**dass** der Substratkörper (7, 9) und der Folienkörper (6, 8) jeweils eine oder mehrere weitere Schichten aufweisen, die sich gegenseitig ergänzende optische Sicherheitsmerkmale generieren.

20. Foliensystem nach einem der Ansprüche 14 bis 19,
**dadurch gekennzeichnet,**
**dass** der Substratkörper und/ oder der einen Teil des optisch variablen Elements bildende Teil des Folienkörpers eine Retarderschicht aufweist, die polarisierende Eigenschaften besitzt.

## Claims

1. Method for the production of an individualised optically variable element (51) having polarising properties, wherein a film body (3, 6, 8) consisting of two or more layers, which has an LCP layer (32, 65, 85) consisting of liquid crystal material, is applied to a substrate body (4, 7, 9) for the production of the optically variable element (51), said substrate body (4, 7, 9) having an orientation layer (41, 75, 96) for the orientation of liquid crystals, wherein the orientation layer (41, 75, 96) of the substrate body (4, 7, 9) is individualised before application of the film body on the substrate body, and wherein the film body (3, 6, 8) is applied to the individualised orientation layer (41, 75, 96) of the substrate body(4, 7, 9)in such a way that the LCP layer (32, 65, 85) of the film body (3, 6, 8) lies on the individualised orientation layer of the substrate body for the orientation of liquid crystals of the LCP layer of the film body.

2. Method according to claim 1,
**characterised in that**,
the orientation layer (41) of the substrate body (4) is individualised by partial marking (43) of the orientation layer.

3. Method according to one of the preceding claims,
**characterised in that**,
the orientation layer (41) of the substrate body (4) is individualised by partial transfer of a differently orientated orientation layer (48) onto the orientation layer (41) of the substrate body (4).

4. Method according to one of the preceding claims,
**characterised in that**,
the orientation layer of the substrate body is individualised by partial mechanical removal of the orientation layer.

5. Method according to one of the preceding claims,
**characterised in that**,
the orientation layer of the substrate body is individualised by partial thermoforming of the orientation layer.

6. Method according to one of the preceding claims,
**characterised in that**,
the orientation layer of the substrate body is individualised by replication of a relief structure in the orientation layer.

7. Method according to one of the preceding claims,
**characterised in that**,
the orientation layer of the substrate body is individualised by exposure of the orientation layer to light.

8. Method according to one of the preceding claims,
**characterised in that**,
an alignment of the liquid crystal material of the LCP layer (32) of the film body (3) on the individualised orientation layer (41) of the substrate body (4)is carried out, and that the aligned liquid crystal material of the LCP layer (32) is fixed thereafter.

9. Method according to claim 8,
**characterised in that**,
the LCP layer (32) of the film body (3) is heated after application of film body (3) to the substrate body (4) for the alignment of the liquid crystal.

10. Method according to one of the preceding claims,
**characterised in that**,
a stamping film, laminating film or sticker film is used as the substrate body (71, 9).

11. Method according to claim 10,
**characterised in that**,
the stamping film, laminating film or sticker film forming the substrate body (71) is applied to a security document (72) before the application of the film body (6) to the substrate body (71).

12. Method according to one of claims 1 to 9,
**characterised in that**,
the substrate body (4, 7) has a carrier layer (42, 72) forming a security document.

13. Method according to one of the preceding claims,
**characterised in that**,
a stamping film, laminating film or sticker film is used as the film body (3, 6, 8), said film being applied to the substrate body (4, 7, 9) in a hot stamping or laminating process.

14. Film system consisting of a substrate body (4, 7, 9) and a film body (3, 6, 8) for the provision of an individualised optically variable element (51) having polarising properties, wherein the film body (3, 6, 8) of the film system consists of two or more layers and has a LCP layer (32, 65, 85) consisting of liquid crystal material, wherein the substrate body (4, 7, 9) of the film system has an orientation layer (41, 75, 96) for the orientation of liquid crystals and wherein the film body (3, 6, 8) is applied to the individualised orientation layer (41, 75, 96) of the substrate body (4, 7, 9) after individualisation of the orientation layer (41, 75, 96) of the substrate body (4, 7, 9) in such a way that the LCP layer (32, 65, 85) of the film body (3, 6, 8) lies on the individualised orientation layer (41, 75, 96) of the substrate body (4, 7, 9) for the orientation of liquid crystals of the LCP layer (32, 65, 85) of the film body (3, 6, 8).

15. Film system according to claim 14,
**characterised in that**,
the orientation layer of the substrate body has UV functional groups for better adhesion of the film body to the substrate body.

16. Film system according to one of claims 14 and 15,
**characterised in that**,
the film body (3, 6, 8) has a carrier layer (31, 61, 81) and a physically dried LCP layer (32, 65, 85).

17. Film system according to one of claims 14 to 16,
**characterised in that**,
the substrate body (7, 9) has one or more further layers (76, 77, 94, 95), which generate optical security features.

18. Film system according to one of claims 14 to 17,
**characterised in that**,
the film body (6, 8) has one or more further layers (64, 83, 84), which generate optical security features.

19. Film system according to one of claims 14 to 18,
**characterised in that**,
the substrate body (7, 9) and the film body (6, 8) both have one or more further layers, which generate complementary optical security features.

20. Film system according to one of claims 14 to 19,
**characterised in that**,
the substrate body and/or the part of the film body forming a part of the optically variable element has a retarder layer which has polarising properties.

## Revendications

1. Procédé servant à fabriquer un élément (51) à variation optique personnalisé présentant des propriétés polarisantes, sachant qu'on applique aux fins de la fabrication de l'élément (51) à variation optique un corps pelliculaire (3, 6, 8) constitué de deux ou de plusieurs couches, lequel présente une couche LCP (polymère à cristaux liquides) (32, 65, 85) constituée d'un matériau à base de cristaux liquides, sur un corps de substrat (4, 7, 9), lequel présente une couche d'orientation (41, 75, 96) servant à orienter des cristaux liquides, sachant qu'on personnalise la couche d'orientation (41, 75, 96) du corps de substrat (4, 7, 9) avant l'application du corps pelliculaire sur le corps de substrat,
et sachant qu'on applique le corps pelliculaire (3, 6, 8) sur la couche d'orientation (41, 75, 96) personnalisée du corps de substrat (4, 7, 9) de telle manière que la couche LCP (32, 65, 85) du corps pelliculaire (3, 6, 8) se trouve sur la couche d'orientation personnalisée du corps de substrat servant à orienter des cristaux liquides de la couche LCP du corps pelliculaire.

2. Procédé selon la revendication 1,
**caractérisé en ce que**
on personnalise la couche d'orientation (41) du corps de substrat (4) par une impression (43) partielle de la couche d'orientation.

3. Procédé selon l'une quelconque des revendications précédentes,
**caractérisé en ce que**
on personnalise la couche d'orientation (41) du corps de substrat (4) par le transfert partiel d'une couche d'orientation (48) orientée différemment sur la couche d'orientation (41) du corps de substrat (4).

4. Procédé selon l'une quelconque des revendications précédentes,
**caractérisé en ce que**
on personnalise la couche d'orientation du corps de substrat par le retrait mécanique partiel de la couche d'orientation.

5. Procédé selon l'une quelconque des revendications précédentes,
**caractérisé en ce que**
on personnalise la couche d'orientation du corps de substrat par la déformation thermique partielle de la couche d'orientation.

6. Procédé selon l'une quelconque des revendications précédentes,
**caractérisé en ce que**
on personnalise la couche d'orientation du corps de substrat par la réplication d'une structure en relief dans la couche d'orientation.

7. Procédé selon l'une quelconque des revendications précédentes,
**caractérisé en ce que**
on personnalise la couche d'orientation du corps de substrat par l'exposition à la lumière de la couche d'orientation.

8. Procédé selon l'une quelconque des revendications précédentes,
**caractérisé en ce que**
on provoque un alignement du matériau à base de cristaux liquides de la couche LCP (32) du corps pelliculaire (3) sur la couche d'orientation (41) personnalisée du corps de substrat (4), et **en ce qu'**on fixe dès lors le matériau à base de cristaux liquides aligné de la couche LCP (32).

9. Procédé selon la revendication 8,
**caractérisé en ce que**
on réchauffe la couche LCP (32) du corps pelliculaire (3) après l'application du corps pelliculaire (3) sur le corps de substrat (4) aux fins de l'alignement des cristaux liquides.

10. Procédé selon l'une quelconque des revendications précédentes,
**caractérisé en ce que**
on utilise en tant que corps de substrat (71, 9) un film à estamper, un film à laminer ou un film à coller.

11. Procédé selon la revendication 10,
**caractérisé en ce que**
on applique le film à estamper, le film à laminer ou le film à coller formant le corps de substrat (71) avant l'application du corps pelliculaire (6) sur le corps de substrat (71) sur un document de sécurité (72).

12. Procédé selon l'une quelconque des revendications 1 à 9,
**caractérisé en ce que**
le corps de substrat (4, 7) présente une couche de support (42, 72) formant un document de sécurité.

13. Procédé selon l'une quelconque des revendications précédentes,
**caractérisé en ce que**
on utilise en tant que corps pelliculaire (3, 6, 8) un film à estamper, un film à laminer ou un film à coller qu'on applique sur le corps de substrat (4, 7, 9), lors d'un processus d'estampage à chaud ou d'un processus de laminage.

14. Système pelliculaire constitué d'un corps de substrat (4, 7, 9) et d'un corps pelliculaire (3, 6, 8) servant à fournir un élément (51) à variation optique personnalisé présentant des propriétés polarisantes, sachant que le corps pelliculaire (3, 6, 8) du système pelliculaire est constitué de deux ou plusieurs couches et qu'il présente une couche LCP (32, 65, 85) constituée d'un matériau à base de cristaux liquides, sachant que le corps de substrat (4, 7, 9) du système pelliculaire présente une couche d'orientation (41, 75, 96) servant à orienter des cristaux liquides et sachant qu'on applique le corps pelliculaire (3, 6, 8) après une personnalisation de la couche d'orientation (41, 75, 96) du corps de substrat (4, 7, 9) de telle manière sur la couche d'orientation (41, 75, 96) personnalisée du corps de substrat (4, 7, 9), que la couche LCP (32, 65, 85) du corps pelliculaire (3, 6, 8) se trouve sur la couche d'orientation (41, 75, 96) personnalisée du corps de substrat (4, 7, 9) servant à l'orientation de cristaux liquides de la couche LCP (32, 65, 85) du corps pelliculaire (3, 6, 8).

15. Système pelliculaire selon la revendication 14,
**caractérisé en ce que**
la couche d'orientation du corps de substrat présente des groupes fonctionnels à UV servant à améliorer l'adhérence du corps pelliculaire sur le corps de substrat.

16. Système pelliculaire selon l'une quelconque des revendications 14 et 15,
**caractérisé en ce que**
le corps pelliculaire (3, 6, 8) présente une couche de support (31, 61, 81) et une couche LCP (32, 65, 85) séchée physiquement.

17. Système pelliculaire selon l'une quelconque des revendications 14 à 16,
**caractérisé en ce que**
le corps de substrat (7, 9) présente une ou plusieurs couches (76, 77, 94, 95) supplémentaires, lesquelles génèrent des caractéristiques de sécurité optiques.

18. Système pelliculaire selon l'une quelconque des revendications 14 à 17,
**caractérisé en ce que**
le corps de film (6, 8) présente une ou plusieurs couches (64, 83, 84) supplémentaires, lesquelles génèrent des caractéristiques de sécurité optique.

19. Système pelliculaire selon l'une quelconque des revendications 14 à 18,
**caractérisé en ce que**
le corps de substrat (7, 9) et le corps pelliculaire (6, 8) présentent respectivement une ou plusieurs couches supplémentaires, lesquelles génèrent des caractéristiques de sécurité optiques se complétant mutuellement.

20. Système pelliculaire selon l'une quelconque des revendications 14 à 19,
**caractérisé en ce que**
le corps de substrat et/ou la partie formant une partie de l'élément à variation optique du corps pelliculaire présentent une couche de retardement qui comporte des caractéristiques polarisantes.
